# FASCICULE DE BREVET EUROPEEN

(11) **EP 1 433 575 B1**
(45) Date de publication et mention de la délivrance du brevet: **31.08.2005**
(21) Numéro de dépôt: 02406141.8
(22) Date de dépôt: 24.12.2002
(51) Int. Cl.: B25J 7/00

(54) **Micro-prehenseur**
Mikrogreifer
Micro gripper

(43) Date de publication de la demande: 30.06.2004
(73) Titulaire: CSEM Centre Suisse d'Electronique et de Microtechnique SA, 2007 Neuchâtel (CH)
(72) Inventeur: Henein, Simon, 2000 Neuchâtel (CH); Thurner, Marc, 6048 Horw (CH)
(74) Mandataire: Gresset, Jean

(56) Documents cités:
- DE-A- 10 107 402
- DE-A- 19 644 502
- DE-C- 10 114 551
- PATENT ABSTRACTS OF JAPAN vol. 018, no. 079 (M-1557), 9 février 1994 (1994-02-09) & JP 05 293778 A (SEIKO INSTR INC), 9 novembre 1993 (1993-11-09)
- KOHL M ET AL: "SMA microgripper with integrated antagonism" SENSORS AND ACTUATORS A, ELSEVIER SEQUOIA S.A., LAUSANNE, CH, vol. 83, no. 1-3, mai 2000 (2000-05), pages 208-213, XP004198316 ISSN: 0924-4247

## Description

La présente invention se rapporte au domaine des microtechniques. Elle concerne, plus particulièrement, un micro-préhenseur destiné à permettre à un robot de haute précision de saisir des pièces de très petites dimensions, c'est à dire, typiquement, de 0.1 à 1mm.

Dans de nombreux domaines (électronique, mécanique, horlogerie,...), les évolutions techniques tendent vers la miniaturisation des éléments existants. Les moyens de production, notamment les chaînes de montage automatiques, doivent donc impérativement s'adapter à ce changement d'échelle.

Des micro-robots sont désormais utilisés pour déplacer ou retourner des petites pièces. Les actionneurs utilisés leur permettent des mouvements de haute précision mais l'un des aspects les plus cruciaux est celui de l'organe de préhension par l'intermédiaire duquel le robot saisit la pièce. Il est, en général, constitué d'une pince à deux mors actionnée par le robot.

Plus la taille de l'objet est réduite, plus le déplacement des mors doit être précis. En outre, il est non seulement nécessaire que la force de préhension soit adaptée à la résistance mécanique de la pièce, mais encore que la géométrie des mors convienne à celle de la pièce, surtout quand sa forme est irrégulière.

Le document DE10114551 présente un micro-préhenseur comportant un bâti rigide (1) et deux cadres (3, 4) montés en parallèle sur le bâti, le premier cadre possédant deux branches élastiquement déformables (18), chacune supportant un mors (17) et le deuxième cadre constituant des moyens d'accouplement à un piston (2). Les branches forment des parallélogrammes qui permettent un déplacement en parallèle des mors.

Le document DE19644502 présente un micro-préhenseur possédant deux doigts (1b) qui pivotent par effet de levier grâce à des articulations élastiques déformables (1a). Des jauges de contraintes (7) disposés dans les doigts permettent de mesurer précisément la force exercée sur l'objet à saisir.

La présente invention a pour but de fournir un micro-préhenseur dont la structure mécanique est particulièrement simple, qui permet un mouvement précis en parallèle des mors du micro-préhenseur, et qui permet d'obtenir des informations concernant la force exercée sur l'objet saisi.

De façon plus précise, l'invention concerne un micro-préhenseur caractérisé en ce qu'il comporte :
- un bâti rigide en forme de U, qui possède deux branches parallèles à son axe et définissant entre elles un espace libre,
- deux cadres identiques parallèles en forme de U, qui possèdent chacun deux branches élastiquement déformables prolongeant les branches du bâti et dont le montant supérieur rigide supporte une interface de fixation d'un mors, décalée par rapport à l'axe, lesdits cadres étant disposés tête-bêche de manière à ce que les deux mors constituent un organe de préhension,
- un piston monté mobile en translation selon l'axe du bâti dans l'espace libre de celui-ci,
- des moyens d'accouplement dudit piston au montant supérieur de chaque cadre de manière à imposer à leurs branches respectives une déformation qui fait déplacer symétriquement les deux interfaces de fixation dans le plan du bâti perpendiculairement à son axe, et
- des moyens de commande du piston.

Le micro-préhenseur selon l'invention comporte encore les caractéristiques suivantes :
- Le piston comprend au moins une première structure rigide en L possédant deux ailes orthogonales, l'une étant disposée à la partie supérieure du bâti, l'autre étant parallèle à ses branches et couplée à l'une d'elles par une paire de lames élastiquement déformables.
- Le piston comprend une deuxième structure rigide en L orientée tête-bêche par rapport à la première et possédant deux ailes orthogonales, l'une étant disposée à la partie inférieure du bâti, l'autre étant parallèle à ses branches et couplée à l'aile de la première structure qui lui fait face par une paire de lames élastiquement déformables.
- Les moyens d'accouplement comportent deux lames de renvoi élastiquement déformables qui, pour chaque cadre, partent respectivement de l'extrémité du montant supérieur la plus éloignée de l'interface de fixation pour rejoindre l'extrémité opposée du piston.
- Les moyens de commande comportent un actionneur extérieur et une tige de découplage reliant l'actionneur à la portion du piston située dans la partie inférieure du bâti.
- Le micro-préhenseur comporte, en outre, un capteur de force disposé sur l'un de ses éléments élastiquement déformables pour fournir des informations sur la force exercée par les mors sur la pièce à saisir.
- Le capteur de force est disposé sur l'une des lames de la deuxième structure rigide en L.
- La tige de découplage est recourbée et élastiquement déformable ; dans ce cas le capteur de force est disposé sur elle.
- L'une des interfaces de fixation est reliée au montant supérieur de son cadre par une micro-structure élastiquement déformable ; dans ce cas, le capteur de force est disposé sur elle.
- Le micro-préhenseur est monolithique et réalisé en silicium usiné par électro-décharge (electro-discharge machining, E. D. M.).
- Le micro-préhenseur peut aussi être réalisé en trois pièces planes fixées entre elles, le bâti étant en deux parties identiques en U montées tête-bêche et dont les branches respectives sont prolongées par les branches souples des deux cadres, les montants supérieurs de ceux-ci étant respectivement liés au piston par les lames de renvoi et le piston faisant alors partie d'une pièce en U, formant entretoise, dont les branches sont insérées en sandwich entre les branches du bâti.
- Les lames de la deuxième structure rigide, les lames de renvoi, la tige de découplage recourbée et ladite micro-structure sont élastiquement déformables dans le plan du bâti et sont rigides dans le sens de son épaisseur.

D'autres caractéristiques de l'invention ressortiront de la description qui va suivre, faite en regard du dessin annexé, dans lequel :
- les figures 1 et 2 illustrent un micro-préhenseur selon un premier mode de réalisation particulier, les mors étant respectivement en position ouverte et fermée;
- la figure 3 est une vue d'un tel micro-préhenseur en position ouverte, représenté en coupe selon l'axe AA ;
- la figure 4 est une vue éclatée montrant, lorsqu'il n'est pas monobloc, les différentes pièces qui forment le micro-préhenseur des figures 1 à 3 ; enfin,
- les figures 5 et 6 représentent deux autres modes de réalisation d'un micro-préhenseur selon l'invention.

Le micro-préhenseur selon l'invention peut être réalisé en silicium, en aluminium, en un alliage de cuivre et de béryllium ou tout autre matériau déformable élastiquement, y compris un polymère. Typiquement, il a une longueur de 8 mm, une largeur de 5 mm et une épaisseur de 1.5 mm, l'épaisseur étant la dimension orthogonale au plan du dessin. Ces dimensions peuvent être très fortement réduites, même jusqu'à un facteur 100.

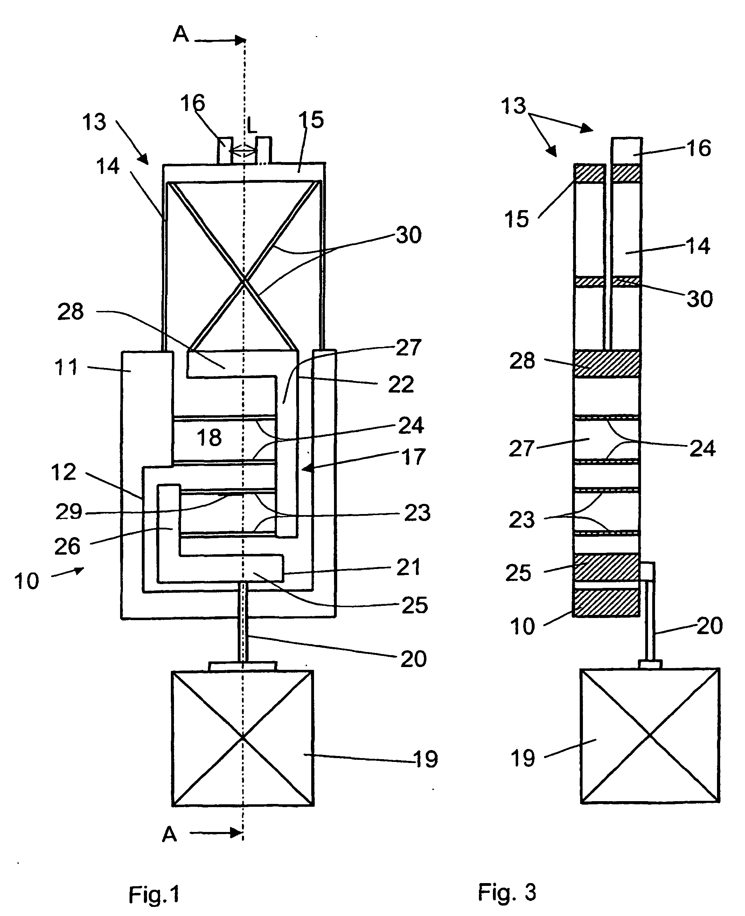

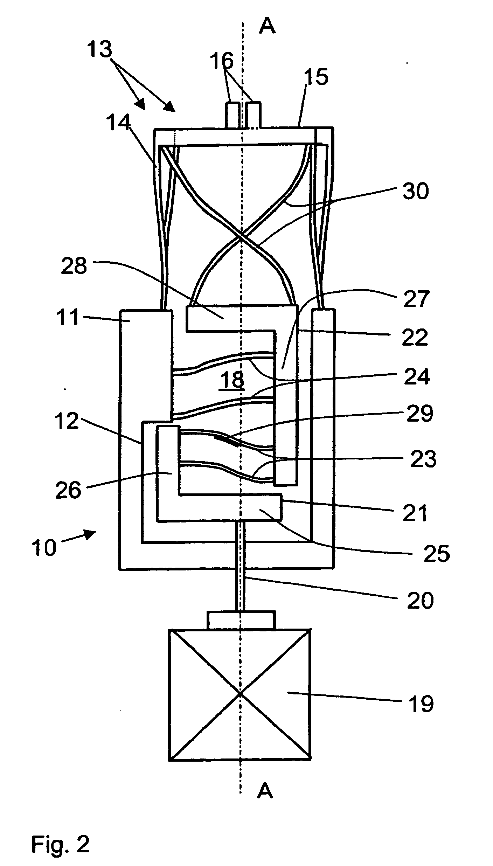

Le micro-préhenseur des figures 1, 2 et 3 comporte un bâti rigide 10 maintenu dans un support fixe (non représenté). Il est en forme de U et possède deux branches 11 parallèles à son axe longitudinal AA. L'une d'elles présente, dans sa moitié inférieure, une échancrure interne 12 de forme parallélépipédique, dont la fonction sera précisée plus loin.

Le bâti 10 est couplé à deux cadres identiques élastiquement déformables 13, également en forme de U, parallèles à son plan et dont les branches 14 prolongent les siennes. Ces cadres ne se touchent pas et ont une épaisseur inférieure à la moitié de celle du bâti 10. Typiquement, les branches 14 ont une épaisseur de l'ordre de 1mm et une largeur de l'ordre de 100µm. Cette configuration leur confère une rigidité dans l'épaisseur du bâti et de la souplesse dans son plan.

Le montant supérieur 15 des deux cadres 13 est rigide et supporte une interface de fixation 16 d'un mors (non représenté), légèrement décalée par rapport à l'axe AA . Comme le montrent les figures, ces cadres sont disposés tête-bêche, de sorte que les mors fixés aux interfaces 16 constituent un organe de préhension.

Une interface de guidage en translation 17, qui, pour faciliter la lecture de la description, sera appelée piston ci-après, est montée mobile en translation selon l'axe AA du bâti 10 dans l'espace libre 18 entre ses deux branches 11. Son mouvement est commandé par un actionneur 19, disposé à l'extérieur du dispositif, au travers d'une tige de découplage rectiligne 20 à cinq degrés de liberté, c'est à dire rigide selon AA et souple dans les autres directions.

Le piston 17 comprend deux structures rigides en L 21 et 22 et deux paires de lames parallèles déformables élastiquement 23 et 24.

La structure rigide en L 21, dite structure inférieure, prend place dans le fond de l'espace 18. Elle possède deux ailes orthogonales 25 et 26. L'aile 25 est parallèle au fond du bâti 10 et c'est elle qui est reliée, selon l'axe AA, à l'actionneur 19 par la tige de découplage 20. L'aile 26, parallèle aux branches 11, prend partiellement place dans l'échancrure 12 dont les parois constituent ainsi des butées pour limiter les déplacements axiaux du piston 17.

La structure rigide en L 22, dite structure supérieure, qui possède deux ailes orthogonales 27 et 28, est orientée tête-bêche par rapport à la structure inférieure 21 et prend place dans le dessus de l'espace 18. L'aile 27 est parallèle aux branches 11 du bâti 10 et longe la branche opposée à celle qui comporte l'échancrure 12. On notera que la partie inférieure de l'aile 27 se trouve en regard de l'aile 26. L'aile 28, disposée au sommet du bâti 10, est parallèle à l'aile 25 de la structure inférieure 21.

Les deux structures rigides 21 et 22 sont accouplées de manière élastique par la paire de lames 23, parallèles au fond du bâti 10, qui relie les ailes 26 et 27. Ces lames ont, typiquement, une épaisseur d'environ 100µm et une largeur de l'ordre de 2 à 3mm. Ce rapport de dimensions, visible en comparant les figures 1 et 3, confère aux deux lames de la rigidité dans le sens de l'épaisseur du bâti et de la souplesse dans son plan.

L'une des lames 23, au moins, seule structure élastique intermédiaire entre l'actionneur 19 et les deux cadres 13, sert de corps d'épreuve pour un capteur de force 29 constitué, par exemple, d'une jauge de contrainte déposée sur la lame sous la forme d'une couche piézo-électrique, dont le rôle apparaîtra plus loin.

La deuxième paire de lames 24, également parallèles au fond du bâti 10, couple de manière élastique l'aile 27 de la structure rigide supérieure 22 et une branche 11 du bâti. Leurs dimensions sont les mêmes que celles des lames 23 et elles ont donc le même comportement. Le bâti 10 étant fixe, la rigidité latérale des lames 24 permet ainsi au piston 17 de rester dans l'axe de translation AA de l'actionneur.

Les deux cadres 13 sont chacun couplés au piston 17 par l'intermédiaire d'une lame de renvoi élastiquement déformable 30 qui, pour chaque cadre, part, à environ 45°, de l'extrémité du montant supérieur 15 la plus éloignée de l'interface de fixation 16 pour rejoindre l'extrémité opposée de l'aile 28. Les deux lames 30 se croisent ainsi à peu près perpendiculairement. Typiquement, ces lames ont une épaisseur d'environ 100µm et une largeur d'environ 1mm. Ce rapport de dimensions leur confère une grande rigidité dans le sens de l'épaisseur du bâti et de la souplesse dans son plan.

Lorsque le micro-préhenseur est au repos (figure 1), les branches 14 et les lames de renvoi 30 des deux cadres 13 sont rectilignes, de même que les deux paires de lames 23 et 24. Les cadres sont donc parfaitement alignés. Les interfaces de fixation des mors 16 sont alors en position ouverte, éloignées d'une distance L, typiquement de 2 mm.

En fonctionnement (figure 2), lorsque l'actionneur 19 soulève le piston 17, selon l'axe AA, par l'intermédiaire de la tige de découplage 20, les deux lames de renvoi 30 font subir aux branches 14 de chacun des deux cadres 13 des déformations dans le plan du bâti, symétriques par rapport à l'axe AA , ce qui a pour effet de rapprocher symétriquement l'une de l'autre les interfaces de fixation des mors 16. Ceux-ci, à l'instar d'une pince, peuvent alors saisir une pièce.

La figure 2 montre qu'en raison de la force de résistance exercée par la pièce saisie, les lames 23 se déforment. Cette déformation est mesurée par le capteur de force 29 qui fournit des informations permettant d'ajuster la course du piston 17 de manière à obtenir la force de serrage la mieux appropriée à la pièce saisie.

On notera que les branches 14 et les lames 24 garantissent respectivement le parallélisme et la symétrie du mouvement des interfaces de fixation 16 des mors.

Bien entendu, lorsque l'actionneur 19 fait redescendre le piston 17, les éléments de la structure reviennent à leur position de repos, libérant ainsi la pièce tenue par les mors.

Le micro-préhenseur qui vient d'être décrit en regard des figures 1, 2 et 3 est monolithique, avantageusement réalisé en silicium usiné par électro-décharge (technique plus connue sous le nom de electro-discharge mechaning, E. D. M.), seule la tige de découplage 20 étant une pièce rapportée.

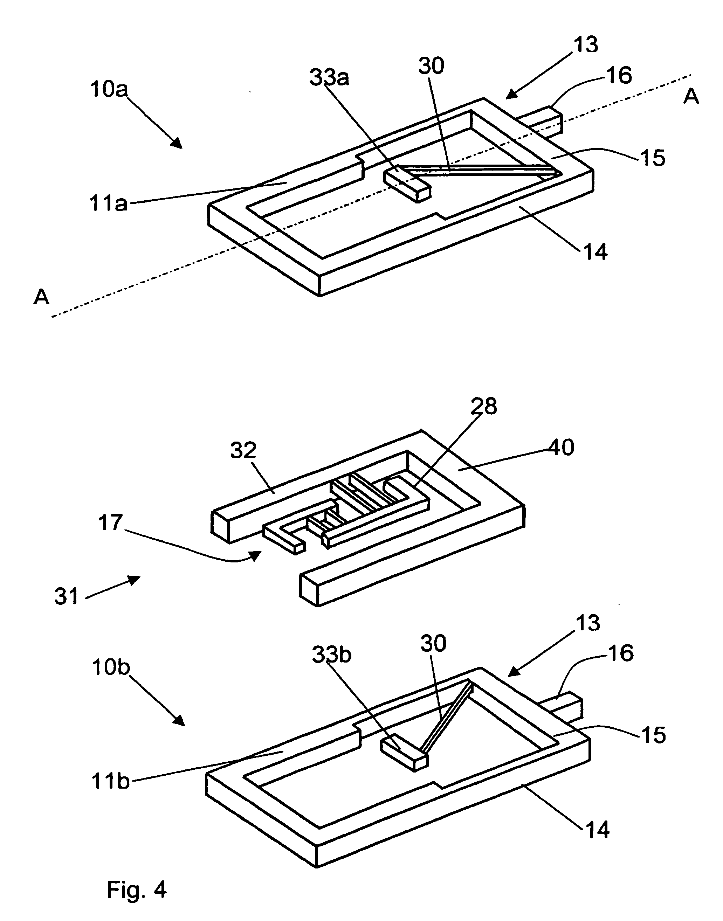

La figure 4, sur laquelle les éléments communs aux figures 1, 2 et 3 portent les mêmes numéros de référence, montre que le micro-préhenseur selon l'invention peut aussi être réalisé en trois pièces planes assemblées entre elles, avantageusement par collage.

Dans ce cas, le bâti 10 est en deux parties identiques en U 10a et 10b montées tête-bêche et dont les branches respectives 11a et 11b sont prolongées par les branches souples 14 des deux cadres 13. Les montants supérieurs 15 de ceux-ci sont respectivement liés au piston 17 par les lames de renvoi 30.

Le piston 17 fait alors partie d'une pièce en U 31 formant entretoise, dont les branches 32 sont insérées en sandwich entre les branches 11a et 11b du bâti 10. On remarquera que l'aile supérieure 28 du piston 17 est couplée aux lames de renvoi 30 par deux plots 33a et 33b solidaires des extrémités de ces lames.

Les trois pièces constituant le micro-préhenseur de la figure 4 sont avantageusement réalisées, d'un seul tenant, en un alliage de cuivre et de béryllium ou en un acier ressort.

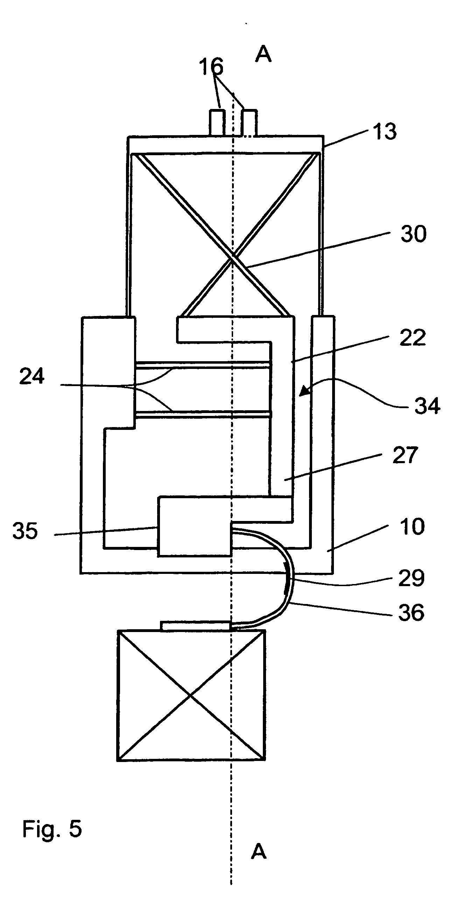

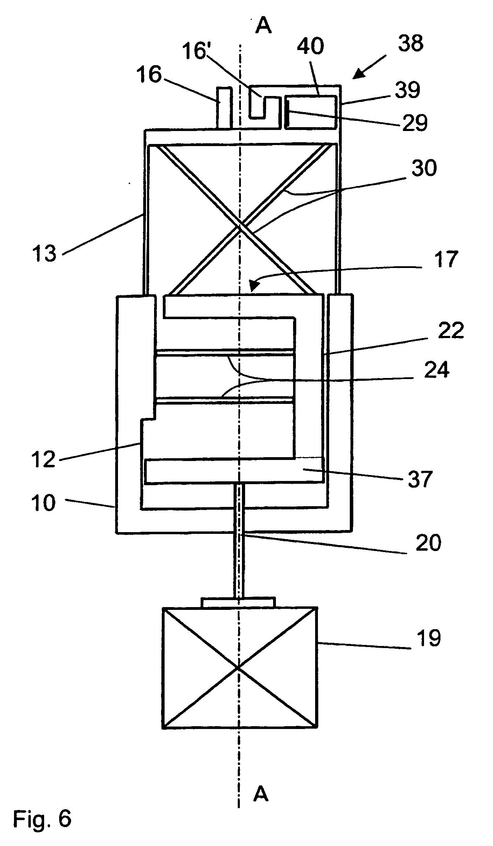

D'autres modes de réalisation de l'invention, principalement remarquables par l'emplacement du capteur de force, sont illustrés par les figures 5 et 6. Ces variantes peuvent s'appliquer à un micro-préhenseur monolithique ou en trois pièces, tels que précédemment décrits.

Le micro-préhenseur de la figure 5 se distingue de celui des figures 1 à 3 essentiellement par le fait que la structure rigide inférieure 21 est supprimée, ainsi que, bien entendu, la paire de lames élastiques 23. Le piston 34 est alors réduit à la structure supérieure 22 dont l'aile 27 est couplée de manière élastique à une branche 11 du bâti par la paire de lames 24.

L'aile 27 est solidaire, par son extrémité inférieure, d'un barreau en sabot 35 parallèle au fond du bâti 10, qui est relié à l'actionneur 19 par une tige de découplage 36 recourbée, au centre de laquelle est fixé le capteur 29. Cette tige est élastiquement déformable dans le plan du bâti et rigide dans le sens de son épaisseur.

Ainsi, lorsque l'actionneur 19 soulève le piston 34 par l'intermédiaire de la tige de découplage 36, la déformation de celle-ci est mesurée par le capteur 29 qui, comme pour le premier mode de réalisation, fournit des informations permettant d'ajuster la course du piston de manière à obtenir la force de serrage la mieux appropriée à la pièce saisie.

Le micro-préhenseur de la figure 6 se distingue de celui de la figure 5 essentiellement par le fait que le barreau en sabot 35 est remplacé par un barreau simple 37 relié en son centre, comme l'aile 25 des figures 1 à 3, à l'actionneur 19 par la tige de découplage rectiligne 20.

Par ailleurs, l'une des interfaces de fixation 16' est reliée au montant supérieur 15 de son cadre 13 par une micro-structure 38 en forme de U reliée au montant 15 par ses deux branches 39. Celles-ci sont déformables élastiquement dans le plan du bâti et reçoivent le capteur de force 29, tandis que le montant transversal 40 de la micro-structure 38 est rigide et se termine par l'interface de fixation 16'.

Ainsi, en fonctionnement, lorsque la pièce est saisie par les mors, les branches 39 se déforment et le capteur de force 29 peut fournir des informations pertinentes pour le réglage du micro-préhenseur.

Les exemples qui viennent d'être décrits ne limitent pas la portée de l'invention et ils peuvent facilement être combinés entre eux. La structure mécanique du micro-préhenseur selon l'invention est particulièrement simple et, de ce fait, sa réalisation est, elle-aussi, grandement facilitée. De plus, l'utilisation des capteurs de force permet de très bien contrôler la pression subie par la pièce et d'adapter la course de l'actionneur en conséquence. Enfin, l'utilisation d'interfaces de fixation des mors donne la possibilité de changer ces mors en fonction de la pièce à saisir.

## Revendications

1. Micro-préhenseur **caractérisé en ce qu'**il comporte :
- un bâti rigide (10) en forme de U, qui possède deux branches (11) parallèles à son axe (AA) et définissant entre elles un espace libre (18),
- deux cadres identiques parallèles (13) en forme de U, qui possèdent chacun deux branches élastiquement déformables (14) prolongeant les branches (11) du bâti et dont le montant supérieur (15) rigide supporte une interface de fixation (16) d'un mors, décalée par rapport à l'axe (AA), lesdits cadres étant disposés tête-bêche de manière à ce que les deux mors constituent un organe de préhension,
- un piston (17) monté mobile en translation selon l'axe (AA) dans ledit espace libre (18),
- des moyens d'accouplement (30) dudit piston au montant supérieur (15) de chacun des deux cadres (13) de manière à faire subir à leurs branches (14) respectives une déformation qui fait déplacer symétriquement les deux interfaces de fixation (16) dans le plan du bâti (10) perpendiculairement à son axe AA, et
- des moyens de commande (19, 20) dudit piston.

2. Micro-préhenseur selon la revendication 1, **caractérisé en ce que** le piston(17) comprend au moins une première structure rigide en L (22), possédant deux ailes orthogonales (27, 28), l'une (28) étant disposée à la partie supérieure du bâti (10), l'autre (27) étant parallèle à ses branches (11) et couplée à l'une d'elles par une paire de lames élastiquement déformables (24) perpendiculaires auxdites branches.

3. Micro-préhenseur selon la revendication 2, **caractérisé en ce que** le piston (17) comprend une deuxième structure rigide en L (21), orientée tête-bêche par rapport à la première (22) et possédant deux ailes orthogonales, l'une (25) étant disposée à la partie inférieure du bâti (10), l'autre (26) étant parallèle à ses branches (11) et couplée à l'aile (27) de la première structure (22) qui lui fait face par une paire de lames (23) élastiquement déformables.

4. Micro-préhenseur selon l'une des revendications 1 à 3, **caractérisé en ce que** lesdits moyens d'accouplement comportent deux lames de renvoi élastiquement déformables (30) qui, pour chaque cadre (13), partent respectivement de l'extrémité du montant supérieur (15) la plus éloignée de l'interface de fixation (16) pour rejoindre l'extrémité opposée du piston (17).

5. Micro-préhenseur selon l'une des revendications 1 à 4, **caractérisé en ce que** lesdits moyens de commande comportent un actionneur (19) extérieur et une tige de découplage (20) reliant l'actionneur à la portion du piston (17) située dans la partie inférieure du bâti (10).

6. Micro-préhenseur selon l'une des revendications 1 à 5, **caractérisé en ce qu'**il comporte, en outre, un capteur de force (29) disposé sur l'un de ses éléments élastiquement déformables pour fournir des informations sur la force exercée par les mors sur la pièce à saisir.

7. Micro-préhenseur selon les revendications 3 et 6, **caractérisé en ce que** ledit capteur de force (29) est disposé sur l'une des lames (23) de la deuxième structure rigide en L (22).

8. Micro-préhenseur selon les revendications 5 et 6, **caractérisé en ce que** ladite tige de découplage (20) est recourbée et élastiquement déformable et **en ce que** ledit capteur de force (29) est disposé sur elle.

9. Micro-préhenseur selon la revendication 6, **caractérisé en ce que** l'une des interfaces de fixation (16') est reliée au montant supérieur (15) de son cadre (13) par une micro-structure (38) élastiquement déformable et **en ce que** ledit capteur de force (29) est disposé sur elle.

10. Micro-préhenseur selon l'une des revendications 1 à 9, **caractérisé en ce qu'**il est monolithique et réalisé en silicium usiné par électro-décharge.

11. Micro-préhenseur selon l'une des revendications 1 à 9, **caractérisé en ce qu'**il est réalisé en trois pièces planes fixées entre elles, le bâti (10) étant en deux parties identiques en U (10a) et (10b) montées tête-bêche et dont les branches respectives (11a) et (11b) sont prolongées par les branches souples (14) des deux cadres (13), les montants supérieurs (15) de ceux-ci étant respectivement liés au piston (17) par les lames de renvoi (30) et le piston (17) faisant alors partie d'une pièce en U (31) formant entretoise, dont les branches (32) sont insérées en sandwich entre les branches (11a) et (11b) du bâti (10).

12. Micro-préhenseur selon la revendication 1, **caractérisé en ce que** les branches (14) des cadres (13) sont élastiquement déformables dans le plan du bâti (10) et rigides dans le sens de son épaisseur, de manière à garantir le parallélisme du mouvement des interfaces de fixation (16).

13. Micro-préhenseur selon la revendication 2, **caractérisé en ce que** l les lames (24) de la première structure rigide (22) sont élastiquement déformables dans le plan du bâti (10) et rigides dans le sens de son épaisseur, de manière à garantir la symétrie du mouvement des interfaces de fixation (16).

14. Micro-préhenseur selon l'une des revendications 3, 4, 8 et 9, **caractérisé en ce que** respectivement les lames (23) de la deuxième structure rigide (21), lesdites lames de renvoi (30), la tige de découplage recourbée (36) et ladite micro-structure (38) sont élastiquement déformables dans le plan du bâti (10) et sont rigides dans le sens de son épaisseur.

15. Micro-préhenseur selon la revendication 5, **caractérisé en ce que** ladite tige rectiligne (20) est rigide selon l'axe (AA) et souple dans les autres directions.

## Claims

1. Microgripper, **characterized in that** it comprises:
- a rigid U-shaped surround (10) which has two branches (11) parallel to its axis (AA) and defining an empty space (18) between them,
- two identical parallel U-shaped frames (13) each of which have two elastically deformable branches (14) prolonging the branches (11) of the surround and the rigid upper member (15) of which supports a fixing interface (16) for attaching a jaw, which interface is offset with respect to the axis (AA), the said frames being arranged top-to-tail in such a way that the two jaws constitute a gripper member,
- a piston (17) mounted so that it can move translationally along the axis (AA) in the said empty space (18),
- coupling means (30) for coupling the said piston to the upper member (15) of each of the two frames (13) so as to subject their respective branches (14) to a deformation that causes the two fixing interfaces (16) to move symmetrically in the plane of the surround (10) perpendicularly to its axis (AA), and
- control means (19, 20) for operating the said piston.

2. Microgripper according to claim 1, **characterized in that** the piston (17) comprises at least a first rigid L-shaped structure (22) having two orthogonal flanges (27, 28), one of them (28) being arranged at the upper part of the surround (10) and the other (27) being parallel to its branches (11) and coupled to one of them by a pair of elastically deformable leaves (24) perpendicular to the said branches.

3. Microgripper according to claim 2, **characterized in that** the piston (17) comprises a second rigid L-shaped structure (21) oriented top-to-tail with respect to the first (22) and having two orthogonal flanges, one of them (25) being arranged at the lower part of the surround (10), the other (26) being parallel to its branches (11) and coupled to the flange (27) of the first structure (22) which faces it via a pair of elastically deformable leaves (23).

4. Microgripper according to one of claims 1 to 3, **characterized in that** the said coupling means comprise two elastically deformable transfer leaves (30) which, for each frame (13), project respectively from the furthest end of the upper member (15) from the fixing interface (16) to meet the end opposite belonging to the piston (17).

5. Microgripper according to one of claims 1 to 4, **characterized in that** the said control means comprise an external actuator (19) and an uncoupling rod (20) connecting the actuator to that portion of the piston (17) that is situated in the lower part of the surround (10).

6. Microgripper according to one of claims 1 to 5, **characterized in that** it further comprises a force sensor (29) arranged on one of its elastically deformable elements in order to provide information about the force exerted by the jaws on the item that is to be grasped.

7. Microgripper according to claims 3 and 6, **characterized in that** the said force sensor (29) is arranged on one of the leaves (23) of the second rigid L-shaped structure (22).

8. Microgripper according to claims 5 and 6, **characterized in that** the said uncoupling rod (36) is curved and elastically deformable and **in that** the said force sensor (29) is arranged on it.

9. Microgripper according to Claim 6, **characterized in that** one of the fixing interfaces (16') is connected to the upper member (15) of its frame (13) by an elastically deformable microstructure (38) and **in that** the said force sensor (29) is arranged on it.

10. Microgripper according to one of claims 1 to 9, **characterized in that** it is monolithic and made of electro-discharge machined silicon.

11. Microgripper according to one of claims 1 to 9, **characterized in that** it is made of three flat parts fixed together, the surround (10) being made in two identical U-shaped parts (10a) and (10b) mounted top-to-tail and the respective branches (11a) and (11b) of which are prolonged by the flexible branches (14) of the two frames (13), the upper members (15) of these frames being connected respectively to the piston (17) by the transfer leaves (30) and the piston (17) then forming part of a U-shaped component (31) forming a brace, the branches (32) of which are sandwiched between the branches (11a) and (11b) of the surround (10).

12. Microgripper according to claim 1, **characterized in that** the branches (14) of the frames (13) are elastically deformable in the plane of the surround (10) and rigid in the direction of its thickness so as to guarantee the parallelism of the movement of the fixing interfaces (16).

13. Microgripper according to claim 2, **characterized in that** the leaves (24) of the first rigid structure (22) are elastically deformable in the plane of the surround (10) and rigid in the direction of its thickness, so as to guarantee the symmetry of the movement of the fixing interfaces (16).

14. Microgripper according to one of claims 3, 4, 8 and 9, **characterized in that**, respectively, the leaves (23) of the second rigid structure (21), the said transfer leaves (30), the curved uncoupling rod (36) and the said microstructure (38) are elastically deformable in the plane of the surround (10) and are rigid in the direction of its thickness.

15. Microgripper according to claim 5, **characterized in that** the said straight rod (20) is rigid along the axis (AA) and flexible in the other directions.

## Patentansprüche

1. Mikrogreifer, **dadurch gekennzeichnet, dass** er umfasst:
- ein U-förmiges, starres Gestell (10) mit zwei Zweigen (11), die parallel zu seiner Achse (AA) verlaufen und zwischen sich einen freien Raum (18) definieren,
- zwei parallele, identische U-förmige Rahmen (13), die jeweils zwei elastisch verformbare Zweige (14) besitzen, die die Zweige (11) des Gestells verlängern und deren obere starre Stütze (15) eine Befestigungszwischenfläche (16) einer Spannbacke stützt, die bezüglich der Achse (AA) versetzt ist, wobei die Rahmen Kopf bei Fuß so angeordnet sind, dass die beiden Spannbacken ein Greiforgan bilden,
- einen Kolben (17), der translatorisch beweglich entlang der Achse (AA) im freien Raum (18) angebracht ist,
- Mittel (30) zur derartigen Verbindung des Kolbens mit der oberen Stütze (15) jedes der beiden Rahmen (13), dass ihre jeweiligen Zweige (14) eine Verformung erfahren, die die beiden Befestigungszwischenflächen (16) in der Ebene des Gestells (10) senkrecht zu seiner Achse (AA) symmetrisch verschiebt, und
- Mittel (19, 20) zur Betätigung des Kolbens.

2. Mikrogreifer nach Anspruch 1, **dadurch gekennzeichnet, dass** der Kolben (17) mindestens eine erste starre L-förmige Konstruktion (22) umfasst, die zwei orthogonale Schenkel (27, 28) aufweist, wobei der eine (28) im oberen Teil des Gestells (10) angeordnet ist, der andere (27) parallel zu seinen Zweigen (11) verläuft und durch ein Paar elastisch verformbarer Blätter (24) senkrecht zu den Zweigen mit einem von ihnen verbunden ist.

3. Mikrogreifer nach Anspruch 2, **dadurch gekennzeichnet, dass** der Kolben (17) eine zweite starre, L-förmige Konstruktion (21) umfasst, die bezüglich der ersten (22) Kopf bei Fuß angeordnet ist und zwei orthogonale Schenkel aufweist, wobei einer (25) im oberen Teil des Gestells (10) angeordnet ist, der andere (26) parallel zu seinen Zweigen (11) verläuft und durch ein Paar elastisch verformbarer Blätter (23) mit dem zu ihm weisenden Schenkel (27) der ersten Konstruktion (22) verbunden ist.

4. Mikrogreifer nach einem der Ansprüche 1 bis 3, **dadurch gekennzeichnet, dass** die Verbindungsmittel zwei elastisch verformbare Rückstellblätter (30) aufweisen, die für jeden Rahmen (13) jeweils von dem Ende der oberen Stütze (15) ausgehen, das von der Befestigungszwischenfläche (16) am weitesten entfernt ist, um wieder mit dem gegenüberliegenden Ende des Kolbens (17) zusammen zu treffen.

5. Mikrogreifer nach einem der Ansprüche 1 bis 4, **dadurch gekennzeichnet, dass** die Betätigungsmittel ein äußeres Stellglied (19) und eine Entkopplungsstange (20) umfassen, die das Stellglied mit dem sich im unteren Teil des Gestells (10) befindenden Teil des Kolbens (17) verbindet.

6. Mikrogreifer nach einem der Ansprüche 1 bis 5, **dadurch gekennzeichnet, dass** er des Weiteren einen Kraftaufnehmer (29) aufweist, der an einem seiner elastisch verformbaren Elemente angeordnet ist, um Informationen über die von den Spannbacken auf das zu ergreifende Teil ausgeübte Kraft zu liefern.

7. Mikrogreifer nach einem der Ansprüche 3 bis 6, **dadurch gekennzeichnet, dass** der Kraftaufnehmer (29) an einem der Blätter (23) der zweiten starren, L-förmigen Konstruktion (22) angeordnet ist.

8. Mikrogreifer nach einem der Ansprüche 5 und 6, **dadurch gekennzeichnet, dass** die Entkopplungsstange (36) gekrümmt und elastisch verformbar ist und dass der Kraftaufnehmer (29) daran angeordnet ist.

9. Mikrogreifer nach Anspruch 6, **dadurch gekennzeichnet, dass** eine der Befestigungszwischenflächen (16') durch eine elastisch verformbare Mikrokonstruktion (38) mit der oberen Stütze (15) seines Rahmens (13) verbunden ist und dass der Kraftaufnehmer (29) daran angeordnet ist.

10. Mikrogreifer nach einem der Ansprüche 1 bis 9, **dadurch gekennzeichnet, dass** er monolithisch ist und aus durch Funkenerosion bearbeitetem Silizium hergestellt ist.

11. Mikrogreifer nach einem der Ansprüche 1 bis 9, **dadurch gekennzeichnet, dass** er aus drei aneinander befestigten ebenen Teilen besteht, wobei das Gestell (10) aus zwei U-förmigen identischen Teilen (10a) und (10b) besteht, die Kopf bei Fuß angebracht sind und deren jeweilige Zweige (11a) und (11b) durch die flexiblen Zweige (14) der beiden Rahmen (13) verlängert sind, wobei ihre oberen Stützen (15) jeweils durch Rückstellblätter (30) mit dem Kolben (17) verbunden sind und der Kolben (17) dann einen Teil eines U-förmigen Teils (31) bildet, das einen Steg bildet und dessen Zweige (32) übereinander geschichtet zwischen den Zweigen (11a) und (11b) des Gestells (10) eingesetzt sind.

12. Mikrogreifer nach Anspruch 1, **dadurch gekennzeichnet, dass** die Zweige (14) der Rahmen (13) in der Ebene des Gestells (10) elastisch verformbar und in Richtung seiner Dicke starr sind, um die Parallelität der Bewegung der Befestigungsgrenzflächen (16) zu gewährleisten.

13. Mikrogreifer nach Anspruch 2, **dadurch gekennzeichnet, dass** die Blätter (24) der ersten starren Konstruktion (22) in der Ebene des Gestells (10) elastisch verformbar und in Richtung seiner Dicke starr sind, um die Symmetrie der Bewegung der Befestigungsgrenzflächen (16) zu gewährleisten.

14. Mikrogreifer nach einem der Ansprüche 3, 4, 8 und 9, **dadurch gekennzeichnet, dass** jeweils die Blätter (23) der zweiten starren Konstruktion (21), die Rückstellblätter (30), die gekrümmte Entkopplungsstange (36) und die Mikrokonstruktion (38) in der Ebene des Gestells (10) elastisch verformbar und in Richtung seiner Dicke starr sind.

15. Mikrogreifer nach Anspruch 5, **dadurch gekennzeichnet, dass** die geradlinige Stange (20) entlang der Achse (AA) starr und in den anderen Richtungen flexibel ist.
